(19) Europäisches Patentamt / European Patent Office / Office européen des brevets

(11) **EP 2 028 441 B1**

(12) **EUROPEAN PATENT SPECIFICATION**

(45) Date of publication and mention
of the grant of the patent:
**17.08.2011 Bulletin 2011/33**

(51) Int Cl.:
*G01C 21/00* *(2006.01)*    *G06F 17/30* *(2006.01)*
*H04L 12/28* *(2006.01)*    *H04L 29/06* *(2006.01)*
*H04L 29/08* *(2006.01)*

(21) Application number: **07016517.0**

(22) Date of filing: **23.08.2007**

(54) **Method for providing a context information to a context-aware application, context server, and context-aware system comprising at least one such context server**

Verfahren zur Übermittlung einer Kontextinformation an eine kontextsensitive Anwendung, Kontextserver und kontextsensitives System mit mindestens einem solchen Kontextserver

Procédé pour fournir des informations contextuelles vers une application sensible au contexte, serveur de contexte, et système sensible au contexte comportant au moins un serveur contextuel de ce type

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**25.02.2009 Bulletin 2009/09**

(73) Proprietor: **Alcatel Lucent**
**75007 Paris (FR)**

(72) Inventors:
• **Meeuwissen, Erik**
**1273 BS Huizen (NL)**
• **Brok, Jacco**
**7542 JR Enschede (NL)**

(74) Representative: **Schmidt, Werner Karl et al**
**Alcatel-Lucent Deutschland AG**
**Intellectual Property & Standards**
**70430 Stuttgart (DE)**

(56) References cited:
**WO-A-2006/106303**

• **MARIA CHANTZARA ET AL: "Designing the Context Matching Engine for Evaluating and Selecting Context Information Sources" MODELING AND RETRIEVAL OF CONTEXT LECTURE NOTES IN COMPUTER SCIENCE; LECTURE NOTES IN ARTIFICIAL INTELLIGENCE;LNCS, SPRINGER-VERLAG, BE, vol. 3946, 2006, pages 101-117, XP019030474 ISBN: 3-540-33587-0**
• **P. PAWAR, A. VAN HALTEREN, K. SHEIKH: "Enabling Context-Aware Computing for the Nomadic Mobile User: A Service Oriented and Quality Driven Approach" WCNC 2007, IEEE, 15 March 2007 (2007-03-15), pages 2531-2536, XP009096812 ISBN: 1-4244-0659-5**
• **MICHAEL KRAUSE ET AL: "Challenges in Modelling and Using Quality of Context (QoC)" MOBILITY AWARE TECHNOLOGIES AND APPLICATIONS LECTURE NOTES IN COMPUTER SCIENCE;;LNCS, SPRINGER-VERLAG, BE, vol. 3744, 2005, pages 324-333, XP019022075 ISBN: 3-540-29410-4**
• **PFEIFER ET AL: "Redundant positioning architecture" COMPUTER COMMUNICATIONS, ELSEVIER SCIENCE PUBLISHERS BV, AMSTERDAM, NL, vol. 28, no. 13, 2 August 2005 (2005-08-02), pages 1575-1585, XP005054223 ISSN: 0140-3664**

**Description**

Background to the Invention

The invention relates to a method for providing a context information to a context-aware application, to a context server, and to a context-aware system comprising at least one context server.

Context-aware infrastructures supporting context-aware applications deal with context information, i.e. with information which is provided by entities acting as context sources, which can be users, devices, or objects. The context information, which is characteristic for the environment and situation of the entity providing the context information, is provided to a context-aware application together with meta-information.

The quality of the context information is one such meta-information, which is referred to as "Quality-of-Information" (QoI) in: Paul Castro and Richard Muntz, "Managing Context Data for Smart Spaces", IEEE Personal Communications, Oct. 2000, pp. 44-46, as "information quality" in: Philip D.Gray and Daniel Salber, "Modelling and Using Sensed Context Information in the Design of Interactive Applications", Proc. 8th IFIP Intern. Conf. on E27ngineering for Human-Computer Interaction, 2001, pp. 317-336, as "context quality" in: Karen Henricksen, Jadwiga Indulska, and Andry Rakotonirainy, "Modeling Context Information in Pervasive Computing Systems", Proc. First Intern. Conf. On Pervasive Computing, Zürich, Switzerland, August 26-28, 2002, pp. 79-117, or as "Quality-of-Context" (QoC) in: Thomas Buchholz, Alex Küpper, and Michael Schiffers, "Quality of Context: What It Is And Why We Need It", Proc. of the 10th Workshop of the OpenView University Association, Geneva, Switzerland, July 2003. Thus, the importance of dealing with the quality of context information is well acknowledged in the literature. The quality of the context information will be described in the following by parameters referred to as quality of context (QoC) parameters, well-known examples of which include probability of correctness, accuracy, trust level, confidence level, and up-to-dateness.

In Hui Lei, Daby M. Sow, John S. Davis II, Guruduth Banavar, and Maria R. Ebling, "The Design and Applications of a Context Service", ACM SIGMOBILE Mobile Computing and Communications Review archive, Vol. 6 , Issue 4, Oct., 2002, pp. 45-55, a context service is described and requirements with respect to QoI are given, i.e.: "A context service must therefore have a clear interface with context sources to allow them to express inaccuracies and uncertainty in the data, via QoI metrics such as freshness, confidence, error, and the like.", "A context source that aggregates different sources of data must address the issue of resolving the different levels of QoI from its sources and providing an aggregate QoI. For example, a context source providing wind chill information may use two other context sources providing current temperature and wind velocity, with different QoI measurements. The aggregated context source must calculate a reasonable aggregate QoI based upon standard scientific practice."

However, the context service described in the above document, as well the context services described in other documents, generally do not resolve ambiguities or inconsistencies in the context information provided by more than one context source, but only forward the QoI data from the context sources to the context-aware applications.

In a paper of Paul Castro, Patrick Chiu, Ted Kremenek, and Richard Muntz, "A Probabilistic Room Location Service for Wireless Networked Environments", Proc. Intern. Conf. On Ubiquitous Computing (Ubicomp 2001), Atlanta, Georgia, USA, Sept. 30 - Oct. 2, 2001, pp. 18-34, a WiFi location service is described that uses a Bayesian network to infer the indoor location of a device based on the signal strength of visible access points. This service performs a very specific way of sensor fusion.

In a paper of Anand Ranganathan, Jalal Al-Muhtadi, and Roy H. Campbell, "Reasoning about Uncertain Contexts in Pervasive Computing Environments", Pervasive Computing, 2004, pp. 62-70, a model is described that deals with uncertainty by representing contexts as predicates, and attaching a confidence value between 0 and 1 to predicates. Then, probabilistic or fuzzy logic can be used for context reasoning.

In a paper of Pravin Pawar, Aart Van Halteren and Kamran Sheikh, "Enabling context-aware computing for the nomadic mobile user: A service oriented and quality driven approach", IEEE wireless communications and networking conference (WCNC), 2007, pp. 2531 - 2536, a context-aware system is described that uses quality of context (QoC) information with correlation of parameters.

To summarize, in general, the importance of QoC is recognized, but existing work is focusing on QoC definition or context modeling with or without taking QoC into account. There is only limited work on quantifying the quality of context information, and there are no efficient methods in the literature for providing a context information to a context-aware application with a requested quality level.

Object of the Invention

It is an object of the invention to provide a method for providing context information to a context-aware application, the context information attaining, if possible, a quality level requested by the context-aware application, as well as to provide a context server and a context-aware system for implementing the method. It is a further object of the invention to deal in a quantitative way with reinforcing and conflicting information from multiple context sources.

## Summary of the Invention

According to a first aspect of the invention, a method as described in the introduction is provided, the method comprising the steps of: receiving at least one context information together with a first QoC parameter, preferably an accuracy measure of the context information, from at least one available context source, determining a second QoC parameter, preferably a probability of correctness of the context information received from each available context source, the first QoC parameter and the second QoC parameter of the context information of each of the available context sources being correlated, and, in case that a quality level derived from the second QoC parameter(s) of the context information of the available context source(s) is lower than a quality level which is requested by the context-aware application, modifying the first QoC parameter of the context information received from one available context source for adjusting the second QoC parameter of that context information in order to attain or exceed the requested quality level, and providing the context information received from the one context source together with the possibly modified first QoC parameter to the context-aware application.

In the method described above, at least two QoC parameters are available as a quantitative measure of the quality level of the context information. The context-aware application uses one (or more) of these QoC parameters to define a target quality level which should be attained by the context information provided to the context-aware application. The inventors found that even in case that only one context source is available, the quality level of the context information requested by a context-aware application can be enhanced in order to attain the requested quality level by making a trade-off between the at least one QoC parameter defining the quality level and at least one further QoC parameter. For example, in case that the quality level requested by a context-aware application is given by the probability of correctness of the context information from one context source, the probability of correctness and thus the quality level can be increased by decreasing an accuracy measure of the context information when the correlation, i.e. the quantitative relation between the two QoC parameters, is known.

Of course, the context-aware application may alternatively request the context information with a target accuracy, in which case a trade-off can be made by decreasing the probability of correctness for increasing the accuracy. Also, it is to be understood that in addition to the first QoC parameter, further QoC parameters may be modified in the way described above for attaining the requested quality level.

In contrast to the method described above, although the state-of-the-art also considers selecting a particular context source, no trade-off is made to satisfy a quality requirement, such that, in case that the quality of the information of the selected context source is poor, either the information is nevertheless used, or the information of the selected context source is discarded. Alternatively, in case that no particular context source is selected, all the information given by the available context sources is provided to the requesting context-aware application.

In a preferred variant, in case that the quality level attained by modifying the first QoC parameter of the one context source differs from the requested quality level, the attained quality level is also provided to the context-aware application. When context information is provided from two or more context sources, it may not be advisable to modify at least one of the QoC parameters in such a way that a reinforcement constraint is no longer satisfied (see below). In this case, after the maximum possible modification of the QoC parameter(s) is reached, the requested quality level may either not be attained or exceeded. In both cases, the attained quality level may be provided to the context-aware application together with the context information. Also with only one context source, the parameter range for the modification of the first QoC parameter may be restricted in order to provide context information which may still be significant to the context-aware application.

In a further preferred variant, in case that the quality level derived from the second QoC parameter(s) of the context information of each available context source exceeds the requested quality level, the first QoC parameter of the context information is modified for adjusting the second QoC parameter of the context information in order to attain the requested quality level. In this special case, the context information is provided to the context-aware application precisely with the quality level requested by the context-aware application, although the context information could be provided at a higher quality level. However, decreasing the quality level to the requested one allows to increase other QoC parameters.

In a highly preferred variant, the context information is received from at least two available context sources, the method further comprising the step of: determining whether or not the context information and at least one of the QoC parameters of the available context sources satisfy a reinforcement constraint leading to an increased degree of belief in the context information.

When context information from two or more context sources is used, a method known as Dempster-Shafer theory can be used to quantitatively deal with conflicting and reinforcing context information, a basic example of this method being described in annex 1 along the lines of the document "Glenn Shafer, Dempster-Shafer theory", downloaded via: www.glennshafer.com/assets/ downloads/articles/article48.pdf. The generalization section of annex 1 which gives a more detailed description of the theory is inspired by the two following manuscripts by G. Shafer: "Perspectives on the theory and practice of belief functions", International Journal of Approximate Reasoning 4 323-362, 1990 and "Constructive probability", Synthese 48 1-60, 1981, Reprinted as Chapter 8 of Classic Works of the Dempster-Shafer Theory of Belief Functions, edited by Ronald R. Yager and Liping Liu, Springer, 2007.

In particular, the quality level of context information from multiple context sources may be described by a degree of belief in the (combined) context information as a quantitative measure defined by Dempster-Shafer theory. It is to be understood that the degree of belief is not necessarily defined in terms of probabilities of correctness as QoC parameters, but may also be defined in terms of other QoC parameters such as trust level, etc.

As described above, the availability of Quality-of-Context (QoC) parameters, such as probability of correctness or trustworthiness, is a prerequisite for the application of Dempster-Shafer theory, as they give an indication on the quality of the context information. In some cases, the context information given by two or more context sources will be contradicting, i.e. the context sources will be conflicting. In other cases, the context sources will provide non-conflicting context information, such that the context sources may reinforce each other. The distinction between reinforcing and conflicting context information provided by two or more context sources can be made by defining a reinforcement constraint and checking if the reinforcement constraint is satisfied.

In a preferred further development of this variant, in case that the reinforcement constraint between the context information and the at least one of the QoC parameters of the available context sources is satisfied, the first QoC parameter of the one context source is modified to a maximal or minimal possible value still satisfying the reinforcement constraint. In this way, the modification of the first QoC parameter is made as large as possible without risking to reduce the degree of belief in the combined context information of the at least two context sources by causing them to provide conflicting results.

In another preferred further development of this variant, in case that the reinforcement constraint is not satisfied, at least one of the QoC parameters of the context information of the one context source is modified in order to satisfy the reinforcement constraint. In case that the two or more context sources provide conflicting answers, the best approach is to modify at least one QoC parameter until the reinforcement constraint is met, i.e. until the at least two sources provide compatible results.

In a further preferred variant, the correlation between the first QoC parameter and the second QoC parameter is determined by measurement or by calculation. In particular, the mutual dependence of the accuracy and of the probability of correctness of the context information may be measured or calculated, either using an analytical or a numerical approach. It is understood that the correlation between other QoC parameters, e.g. the correlation between accuracy or probability of correctness and up-to-dateness of the context information, may be determined in this way as well.

In another advantageous variant, the context information is chosen to be a geographical coordinate and one QoC parameter is chosen to be indicative of the accuracy of the geographical coordinate. In this case, the context information requested by the context-aware application is e.g. a lat/long coordinate of an entity such as an end user. At least one context source may provide the lat/long coordinate of the end user within a given radius, the radius being an accuracy measure for the precision of the lat/long coordinate. For attaining a requested probability (or degree of belief) that the coordinate of the end user's location is correct, it is possible to modify the radius, or, in case that the context-aware application requests the information about the end user's location within a given radius, i.e. with a given accuracy, the probability of correctness may be modified in order to attain the requested accuracy.

A further aspect of the invention is implemented in a context server, comprising: a first communication unit for receiving requests for context information from and providing context information to at least one context-aware application, a second communication unit for receiving at least one context information together with a first QoC parameter, preferably a an accuracy measure of the context information, from at least one available context source, a QoC parameter manipulation unit for determining a second QoC parameter, preferably a probability of correctness of the context information received from each available context source, the first QoC parameter and the second QoC parameter of the context information of each available context source being correlated, the QoC parameter manipulation unit being construed, in case that a quality level derived from the second QoC parameter(s) of the context information of each available context source is below a quality level requested by the context-aware application, to modify the first QoC parameter of the context information received from one available context source for adjusting the second QoC parameter of that context information in order to attain or exceed the requested quality level, the first communication unit being construed to provide the possibly modified first QoC parameter together with the context information of the one context source to the at least one context-aware application. The context server described above makes use of a trade-off between QoC parameters for attaining a requested quality level of the context information provided to the context-aware application.

In a preferred embodiment, the context server further comprises a reinforcement constraint determining unit for determining whether or not the context information and at least one of the QoC parameters of at least two available context sources satisfy a reinforcement constraint leading to an increased degree of belief in the context information. In this case, the context server combines the context information from different context sources in order to attain the requested quality level, i.e. the context server selects one of the available context sources and provides the context information from that context source to the context-aware application, taking into account the context information from other context sources for attaining the requested quality level. The context server may select an arbitrary one of the context sources for providing its context information to the context-aware application, or may select one of the context sources depending on specific criteria. In particular, a context source can be selected whose context information may be reinforced by the context information of at least one further available context source. For example, in case that the reinforcement constraint is defined in terms of accuracy of the context information, the further available context source may provide its context information with a higher accuracy than the selected one.

Another aspect of the invention is implemented in a context-aware system, comprising: at least one context server as described above, at least one context-aware application communicating with the context server for sending requests for context information to and receiving context information from the first communication unit, and at least one context source communicating with the context server for providing context information together with a first QoC parameter, preferably a an accuracy measure of the context information, to the second communication unit. One example for such a context-aware system is a computer network, the context-aware application being realized as a software which is processed by a network user's computer equipment, the context server being located in a central station of the network, and the context sources which provide the context information being implemented as software processed by further network users. Alternatively, the context server and the context-aware application may be implemented as applications in the same physical entity, e.g. a PDA, smartphone, laptop, etc., the (remote) context sources being connected to the context server via the second communication unit, e.g. implemented as an internet access equipment. In this case, the first communication unit may be a (software) interface between the context-aware application and the context server.

In a highly preferred embodiment, at least one context source is selected from the group consisting of a WiFi (WirelessFidelity)-based location source and a GSM(Global System for Mobile Communications)-based location source. In this case, a location estimation may be performed wherein the location estimate of the GSM-based location source (having lower precision) is reinforced by the WiFi-based location source (having higher precision).

Further characteristics and advantages of the invention are provided in the following description of exemplary embodiments of the invention, with reference to the figures of the drawing, which shows details that are significant in the context of the invention, and in the claims. The individual characteristics can be implemented individually by themselves, or several of them can be implemented in any desired combination in a variant of the invention.

Brief Description of the Drawings

Exemplary embodiments are shown in the diagrammatic drawing and are explained in the description below. The following are shown:

Fig. 1          shows an embodiment of a context-aware system according to the invention,

Fig. 2          shows a probability of correctness in dependence of a (normalized) accuracy measure provided by a location source,

Figs. 3a-c    show overlapping (Fig. 3a), non-overlapping (Fig. 3b), and partially overlapping (Fig. 3c) location estimates by two context sources,

Fig. 4          shows reinforcing location estimates of two context sources, a radius of a first location estimate being decreased,

Fig. 5          shows a diagram representing degrees of belief for a varying probability of correctness of a first context source and for a fixed probability of correctness of a second context source,

Fig. 6          shows a location estimation based on a WiFi access point which is sensed in a first location and later on in a second location within a first radius from its actual location,

Figs. 7a,b    show the location estimation of Fig. 6 in the special case that the distance between the first location and the access point is equal to the first radius, the first radius being equal to a second radius,

Fig. 8          shows the location estimation of Fig. 6 in the special case that the distance between the access point and the first location is a fraction of the first radius, the first and second radius being equal,

Figs. 9a,b    show the location estimation of Fig. 6 in two sub-cases in which the distance between the access point and the first location is a fraction of the first radius, the second radius also being a fraction of the first radius,

Fig. 10        shows the probability for the second location to be found at a distance of at most the second radius from the first location for the sub-case shown in Fig. 9b, and

Fig. 11       shows the probability for the second location to be found at a distance of at most the second radius from the first location for the first and second sub-case of Figs. 9a,b.

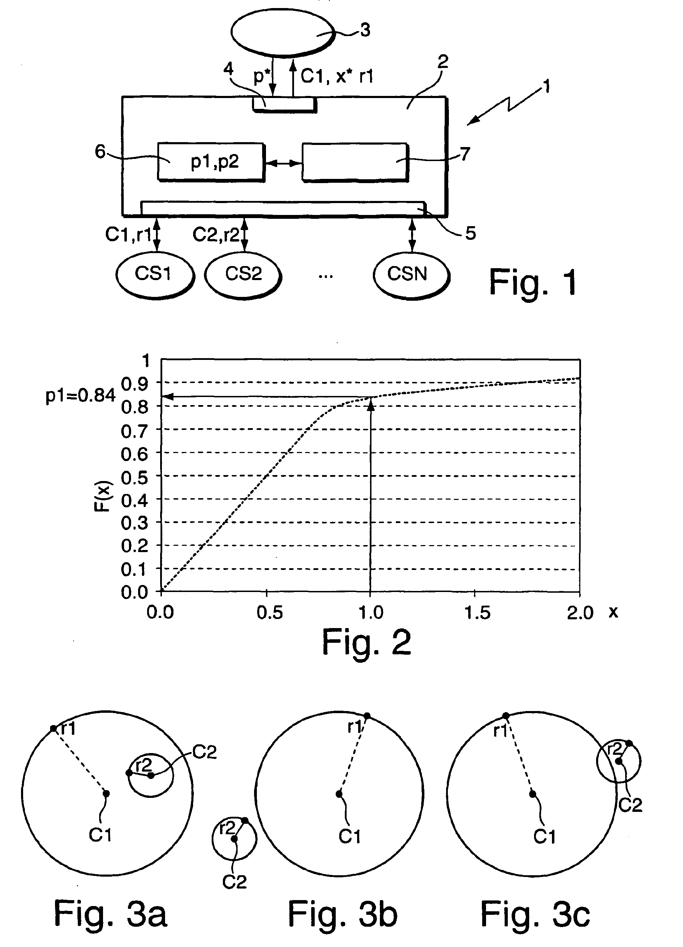

**Fig. 1** shows a context-aware system 1 comprising a context server **2**, a context-aware application **3** and a number of context sources **CS1** to **CSN**. The context server 2 comprises a first communication unit **4** for receiving requests for context information from and providing a context information C1 to the context-aware application 3. The context server 2 further comprises a second communication unit **5** for communicating with the context sources CS1 to CSN. The context server 2 also comprises a QoC parameter manipulation unit **6** and a reinforcement constraint determining unit **7**, the purpose of which will be described in the following.

The context-aware application 3 requests a context information, in the present example a geographical lat/long-coordinate of an end user, with a given quality level. The context server 2 receives the request from the context-aware application and requests the context information from at least one available context source. Available context sources in the sense of this application are context sources which are capable to provide the requested context information. In the example discussed below, the first context source CS1 is a GSM-based location source, whereas the second context source CS2 is a WiFi-based location source, both being capable to provide a location estimation. The first, GSM-based location source CS1 provides a location estimation based on extracted GSM cell IDs, see e.g. GSM cell ID database, hftp://www.lab.telin.nl/~koolwaaij/showcase/gsmcells/, last visited Feb. 7, 2006, and the WiFi-based location source CS2 senses WiFi access point IDs, see e.g. Wireless Geographic Logging Engine, http://www.wigle.net/, last visited Feb. 7, 2006. In general, reliable estimates are available from the first location source CS1 whenever there is GSM coverage, while estimates from the second context source CS2 are only available when WiFi access points can be detected of which the location is known. This is typically not the case on high ways or on the country-side. Therefore, although a plurality of context sources CS1 to CSN may be present in the context-aware system 1, their availability depends on the actual location of the person (e.g. user) whose coordinates are requested by the context-aware application 3. Further examples of context sources which could be available for determining a user's location (yet not considered in the following) are the user's electronic calendar, a GPS receiver on the user's terminal, and a location server in an operator's network. Thus, depending on the type of context information provided, a context source may either be located remotely or close to the user's coordinates.

In the present example, the context-aware application 3 and the context server 2 both are implemented as applications processed in a mobile device of an end user, e.g. a PDA, a smartphone, or a laptop, which has access to the context sources CS1 to CSN over an internet connection equipment which is provided by the second communication unit 5.

In the following, it is described how the requested context information can be provided to the context-aware application 3 by the context server 2 at the requested quality level, making a distinction between the case that only one context source or more than one context source is available.

<u>One available context source</u>

In the following, it is assumed that only the first context source CS1 is available which estimates the location of an end user based on measurements from a GSM network (see above). The context server 2 receives a request for the geographical coordinate with a target quality level corresponding to a probability of correctness **p\***, see Fig. 1. The context server 2 queries the first context source CS1, which returns a geographical coordinate as a context information **C1** and a radius **r1** as a first QoC parameter defining an accuracy measure of the context information C1. The QoC parameter manipulation unit 6 determines a probability of correctness **p1** as a second QoC parameter of the context information C1 received from the first context source CS1 in the following way:

Let random variable X denote the distance between the actual location and the estimate of the location (context information C1) of the end user provided by the first context source CS1 and normalized by the radius r1. Let $F(x) = \mathrm{Pr}\{X \le x\}$ be the corresponding probability distribution function. From real measurements of travelling persons the inventors have derived the following approximation: If $x \le 0.8$, $F(x) = x$, and if $x > 0.8$, $F(x) = 1 - (0.16/x)$, see **Fig. 2.** Observe from Fig. 2 that the probability of correctness that the end user's handset is within a radius r1 meters from the geographical coordinate C1, as estimated by the first context source CS1, equals $p1 = 0.84$. Observe also that the trade-off between probability p1 and accuracy x can be quantified, and that $F(x) \to 1$ for relatively large values of x, e.g. for $x = 4$, $F(x) = 0.96$, or, in other words, requiring probabilities of correctness approaching unity leads to practically unusable accuracy levels. Once the correlation between the accuracy (radius r1) and probability of correctness p1 is known, this correlation can be used to attain the requested probability of correctness p\*, as requested by the context-aware application 3, as described below.

If the requested probability of correctness $p^* \ne p1$, the QoC parameter manipulation unit 6 solves the equation F(x) = p*, which yields a solution x* ≠ 1, else x* = 1. Note that the solution x* is always unique as F(x) is monotonically increasing. The context server 2 provides the context information C1, adapted radius x* × r1, and possibly the confirmed quality level p* to the context-aware application 3. Therefore, if p* > p1, the radius of the region estimated by the first context source CS1 increases, and if p* < p1, the radius decreases. One of the main advantages of this technique is that all requests can be answered, even those for which p* > p1, and even if only a single context source CS1 is available.

Instead of using a measurement for determining the correlation between the probability of correctness p1 and the accuracy x, it is also possible to derive such a correlation by calculation, which will be discussed in greater detail in annex 2 for the case of the second, WiFi-based context source CS2. In any case, the correlation between two or more QoC parameters of one context source can be used to attain the quality level which is requested by the context-aware application 3. Only in case that the context-aware application 3 requests the location C1 with an unnecessarily high probability of correctness p* close to unity, which may result in practically unusable accuracy levels (see Fig. 2), the context server 2 may decide to provide the context information C1 with a probability of correctness below the requested probability p* by limiting the modification range of the accuracy x to reasonable values, e.g. not exceeding a value of x=2.0.

More than one available context source

Context reasoning with the purpose to derive higher-level context attributes from lower level ones makes it possible that the context information from multiple context sources CS1 to CSN, and even different types, can be used. For example, location sources may infer other attributes such as the user's activity, e.g. travelling or working, a characterization of the user's location, e.g. at home or at the office, or the user's method of transportation. Other attributes may even be obtained by combining (inferred) information from multiple sources. The techniques developed below are beneficial in such environments, or even required, to draw meaningful conclusions from the context information provided by multiple context sources, in case that each context source on its own is not reliable (or accurate) enough.

In the following, it is assumed that the time stamps of the context information from different context sources are the same. Otherwise, prediction for one or more context sources should be deployed to compensate for time differences.

Assume that in the example discussed above, the first context source CS1 gives a lat/long coordinate as a first context information C1, a variable first radius r1, and a first probability of correctness p1 = 0.84, while the second context source CS2 gives a second lat/long coordinate C2, a fixed second radius r2 = 50 m, and a second probability of correctness p2 = 0.7. As discussed in annex 1, the first and second probability p1 and p2 relate to a first question Q1 addressing the reliability of the two context sources CS1 and CS2, respectively.

What kinds of questions Q2 are possible such that the information from the two context sources CS1, CS2 can be combined in line with Dempster-Shafer theory? Of course, it should be a question that both context sources CS1, CS2 are able to answer. An example of such a question Q2 is: "Is the handset within r1 meters from point C1?" In this case, the two context sources CS1 and CS2 can reinforce each other, see **Fig. 3a,** or conflict with each other, see **Fig. 3b and c**. If both context sources CS1 and CS2 answer YES, the degree of belief in this answer equals 1 - (1-p1) (1-p2). If the first context source CS1 answers YES, and the second context source CS2 answers NO, the degree of belief in YES equals p1 (1-p2) / (1-p1 p2), and the degree of belief in NO equals p2 (1-p1)/(1-p1 p2).

In practice, the values C1, r1 of the first context source CS1 are delivered to and the probability p1 is determined by the QoC parameter manipulation unit 6 and the same is done with the corresponding set of values (C2, r2, p2) of the second context source CS2. The reinforcement constraint determining unit 7 determines whether or not the first QoC parameters r1, r2 and the context information C1, C2 of the two context sources CS1, CS2 satisfy a reinforcement constraint, i.e. determines what the answer of the second context source CS2 to the above question would be, YES or NO.

**[0044]** Note that for ensuring that the reinforcement constraint is always well-defined, when the case of partially overlapping areas (see Fig. 3c) occurs often in practice, an alternative choice of question Q2 could be "Is the handset within r1 + 2 r2 meters from point C1?" An example of a question that only the second context source CS2 is able to answer is: "Is the handset within r2 meters from point C2?" In this case, the information from the two context sources cannot be combined. In other words, the WiFi-based estimate of the second context source CS2 can reinforce the GSM-based estimate of the first context source CS1, but the GSM-based estimate cannot strengthen the WiFi-based estimate.

Now we consider the approach that (1) on cell ID changes in a travelling handset, estimates are obtained from the first context source CS1, and (2) occasionally at the same moments in time independent estimates are obtained from the second context source CS2 based on one or more sensed WiFi access point IDs. We do not consider the alternative approach of favouring the second context source CS2 as primary context source, and falling back to the first context source CS1 when no estimate from the second context source CS2 is available. As we have seen in the previous paragraph, the WiFi-based estimate cannot be reinforced by the GSM-based method. A possible advantage of the approach which is considered here is smaller drainage of battery power in the handset caused by continuous scanning for WiFi access points.

In the following, it is assumed that the context-aware application 3 indicates a target probability level p* as described above. Possible alternatives are indicating an accuracy level, or indicating both a probability and an accuracy level. In the following, the same example as above will be discussed, i.e. the trade-off between probability and accuracy will be exploited. A requirement on both of these QoC parameters is not recommended in this case, as it may easily lead to a non-unique solution or no solution at all within the context server 2. Assuming that question Q2 is "Is the handset within $r1$ meters from point C1?", in case that the two context sources CS1, CS2 are available, the trade-off between probability and accuracy will be exploited as follows:

The reinforcement constraint determining unit 7 checks whether or not the second context source CS2 reinforces the first context source CS1, i.e. whether distance(C1,C2) + r2 ≤ r1 (see Fig. 3a), or whether the two context sources CS1, CS2 are conflicting (see Fig. 3b).

**Reinforcing sources**

The context server 2 concludes that the handset is within $r1$ meters from C1 with probability 1 - (1-p1) (1-p2). Now two cases have to be distinguished:

Case a:

If $p^* > 1 - (1-p1)(1-p2)$, radius r1 can be increased (i.e. the accuracy can be decreased) until the target probability $p^*$ is achieved. This is done as follows: Solve equation $p^* = 1 - (1-p1)(1-p2)$ for variable p1. Given solution $p1^* > p1$, solve equation $F(x) = p1^*$ (cf. Fig. 2). Given solution $x^* > 1$, the context server 2 returns the context information C1 of the first context source CS1, increased radius $x^* \times r1$, and $p^* = 1 - (1-p1^*)(1-p2)$ to the context-aware application 3 (see Fig. 1).

Case b:

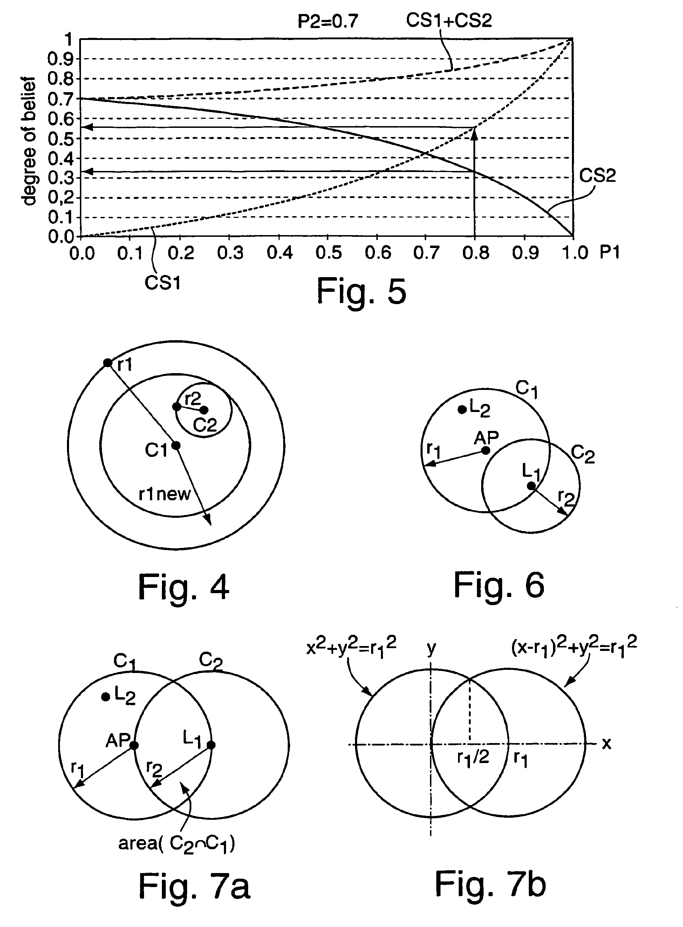

If $p^* < 1 - (1-p1)(1-p2)$, the radius r1 can be decreased, and the probability p1 can be lowered, i.e. probability and accuracy can be traded off, but the new radius r1 new has to satisfy the *reinforcement constraint* distance(C1,C2) + r2 ≤ **r1new** ≤ r1, i.e. the two context sources CS1, CS2 have to keep reinforcing each other, see **Fig. 4**. The following algorithm may be performed in this case:

Solve equation $p^* = 1 - (1-p1)(1-p2)$ for variable p1. Given solution $p1^* < p1$, solve equation $F(x) = p1^*$ (see Fig. 2). Given solution $x^* < 1$, compute r1 new = $x^* \times$ r1, and check whether the above reinforcement constraint is satisfied. If so, the context server 2 returns the context information C1, decreased radius r1new, and $p^* = 1 - (1-p1^*)(1-p2)$ to the context-aware application 3. If not so, set r1 new = distance(C1,C2) + r2, i.e. the minimum value allowed, and compute $x^* = $ r1 new / r1, $p1^{**} = F(x^*)$, and $p^{**} = 1 - (1-p1^{**})(1-p2)$. The context server 2 returns the context information C1, the decreased radius r1new, and $p^{**} > p^*$. Notice that in the latter case, the target probability $p^*$, respectively the degree of belief, is not only attained, but exceeded!

**Conflicting sources**

If the first and second context sources CS1, CS2 are conflicting (see Fig. 3b), degrees of belief in the answers of the first and second context source CS1, CS2 can be computed. Based on this computation, the context server 2 could return an answer that is not likely to meet the target probability. Alternatively, ignoring one of the context sources and falling back to a single context source is not recommended, as this would be "closing the eyes" to additional evidence. The best approach is to increase the radius r1, i.e. to decrease accuracy, until the first and second context source CS1 and CS2 are no longer conflicting, i.e. to set r1 new = distance(C1,C2) + r2 > r1, to compute $p1^{**} = F(r1new/r1) > p1$, and $p^{**} = 1 - (1-p1^{**})(1-p2)$. If the target probability is not yet reached, the radius r1 is even further increased until $p^{**} = p^*$. In this case, the context server 2 provides the context information C1, the increased radius r1 new, and the adjusted probability value $p^{**}$ to the context-aware application. In this way, a relatively inaccurate estimate with relatively high probability $p^{**} \geq p^*$ is obtained.

In the example above, a geographical coordinate is used as context information and a trade-off is made between the accuracy of the geographical coordinate and the probability of belief. It is to be understood that the location estimation may also be performed using different context sources, e.g. with multiple Access Points or that the approach may be based on the activity of the person whose location is to be determined, wherein the activity may be traveling data from a calendar, GPS data, or cellular network data. Moreover, the above approach is not limited to the example of location determination. A further possibility for application of the above formalism is e.g. the prediction of a future event, a first QoC parameter being the percentage that the most likely outcome is correct, a second QoC parameter being the remaining time to that event.

In summary, the context-aware system 2 performs QoC calculus running on a terminal or in a network and aims to achieve a target quality level of context information as requested by the context-aware application 3. The context server 2 can make use of *both* trade-offs between different QoC parameters of a particular context source, and methods based on Dempster-Shafer theory to quantitatively deal with reinforcing or conflicting information provided by multiple context sources. In such a way, the quality of the context information can be improved which is essential for the realization of personalized and context-aware services. The approach given above is unique in that it deals with quality of context information in context-aware systems in a quantitative way. It provides a system that takes all available context information from one or more context sources into account to best satisfy a requested quality requirement in order to provide more usable results.

annex 1: An introduction to Dempster-Shafer theory

The degree of belief as defined in Dempster-Shafer theory is a quantitative measure that helps to make decisions within a context-aware system on the quality of the (combined) information from multiple context sources, i.e. it helps to define the quality level of the context information when multiple sources are present and may be derived from the QoC parameters described above. Note that the degree of belief may not always be improved by accessing multiple context sources, as the availability of two conflicting context sources may very well lead to a lower, but hopefully more realistic, degree of belief than the availability of one context source only.

**Basic Example**

In the following, a basic example of two Context Sources with YES/NO answers is given for illustrating the application of Dempster-Shafer theory. It is assumed that a first and second context source, in the following referred to as CS1 and CS2, are available, each having a probability of correctness $p1$ and $p2$, respectively. In a context-aware system, $p1$ and $p2$ are QoC parameters. One interpretation is: If someone would be asked a first question Q1 "Is CSj reliable?", the subjective probability that the answer is YES equals $pj$ and the probability that the answer is NO equals $1-pj$, $j \in \{1,2\}$.

Suppose that the first context source CS1 is asked to answer a second question Q2 *related* to the first question Q1 either by logic or by evidence, e.g. "Is person X working?", "Is person X at home?", or "Is person X traveling by train?". This second question gives the actual context information in which we are interested. Assume that the first context source CS1 answers the second question Q2 with YES, or alternatively, states that "person X is working", "person X is at home", or "person X is traveling by train". Within a context-aware system a query could be interpreted as a question to a context source, and a trigger could be interpreted as a statement from a context source. If the first context source CS1 is reliable, the answer must be correct (or: the statement must be true), but if the first context source CS1 is unreliable, the answer is not necessarily incorrect (or: the statement is not necessarily false). As a result, the degree of belief that the answer is correct equals $p1$, and the degree of belief that its opposite is correct equals zero. This zero degree of belief only indicates that there is no evidence for the statement, although it could be true, while a zero probability would mean that we are 100% sure it is false. The notion of degree of belief is formalized below. In addition, suppose that the same question is answered by the second context source CS2. Similarly, the degree of belief that this answer is correct equals $p2$, and the degree of belief that its opposite is correct equals zero.

Now we combine degrees of belief, i.e. information from the two context sources, assuming a priori *independence* between the correctness of the context information of the first context source CS1 and of the second context source CS2. Non-conflicting answers lead to reinforcement of context information from different context sources CS1, CS2. The independence disappears in case of conflicts. The formulas for the degree of belief in these cases are given as follows:

If the answers of the first and second context sources CS1, CS2 are the same, the degree of belief in this answer equals $1 - P\{CS1 \text{ is incorrect, } CS2 \text{ is incorrect}\} = 1 - (1-p1) \cdot (1-p2)$. Note that this value is larger than $p1$ and larger than $p2$.

If the answers of CS1 and CS2 are not the same and non-contradicting, which cannot occur in this simple example with YES/NO answers to the second question Q2, the degree of belief in both answers equals $p1 \cdot p2$.

If the answers of the first and the second context source CS1, CS2 are contradicting, only one of them can be correct. The a priori probabilities that only the first context source CS1 is correct, that only the second context source CS2 is correct, or that both context sources CS1 and CS2 are incorrect are $p1 \cdot (1-p2)$, $p2 \cdot (1-p1)$, and $(1-p1)(1-p2)$, respectively. Normalizing these probabilities with $P\{CS1 \text{ and } CS2 \text{ are contradicting}\} = 1 - P\{CS1 \text{ and } CS2 \text{ are non-contradicting}\} = 1 - p1 \cdot p2$, yields a degree of belief in CS1 of $p1 \cdot (1-p2) / (1-p1 \cdot p2)$, and a degree of belief in CS2 of $p2 \cdot (1-p1) / (1-p1 \cdot p2)$.

As a numerical example, assume $p1=8/10$ and $p2=7/10$. If the answers of the first and second context sources CS1, CS2 are the same, the resulting degree of belief is $47/50=0.94$. If the answers of CS1 and CS2 are not the same and non-contradicting, the corresponding degree of belief equals $14/25=0.56$. If the answers of the first and second context source CS1, CS2 are contradicting, the degree of belief in the answer of the first context source CS1 equals 6/11≈0.55, and the degree of belief in the answer of the second context source CS2 equals 7/22≈0.32, see also **Fig. 5.** As illustrated in Fig. 5, non-conflicting context sources can reinforce each other, whereas the availability of a second conflicting context source can lower the degree of belief.

### Generalization

Suppose we have a first question Q1 with a *finite* set of *mutually exclusive answers.* This set of answers is denoted as frame F1, e.g. {YES, NO}, {CS1 is reliable, CS1 is not reliable}. Each answer has a given *probability.* Now suppose we have a second question Q2 with frame F2, e.g. {YES, NO}, {person X is working, person X is not working}, {person X is at home, person X is not at home}, or {air plane, bike, bus, car, feet, train}. The general approach is to use the first question to characterize the QoC parameters of a context source, and the second question to obtain the actual context information from the context source. Based on the probabilities for the first question Q1, we wish to derive degrees of belief for the second question Q2. In other words, given the QoC parameters of multiple context sources that can answer the second question Q2, what are the degrees of belief of their reinforcing or possibly conflicting answers?

### Compatible Answers

For $f1 \in F1$, let $r(f1) \subseteq A \subseteq F2$ be the set of answers to the second question Q2 that are *not* ruled out by answer f1 to the first question Q1. The so-called set of compatible answers is defined by C = {(f1, f2) | f2 $\in \Gamma$(f1)}, and the mapping r(f1) from F1 to F2 is given by $\Gamma$(f1) = {f2 | (f1, f2) $\in$ C }. For example, in the basic example discussed above, once the first context source CS1 answered the second question Q2 with YES, C = {(YES, YES), (NO, YES), (NO, NO)}, and combination (YES, NO) is not compatible, i.e. $\Gamma$(YES) = {YES} and $\Gamma$(NO) = {YES, NO}. In general, when Q1 and Q2 are related questions, and when the answer to Q2 is known, not all possible answers to the first question Q1 are compatible with all possible answers to the second question Q2, and the set of compatible answers can be determined.

### Definition of Belief Functions

When the second question Q2 is answered (or: a corresponding statement is made), Dempster-Shafer theory can be used to make a judgment. To this end, belief functions are defined. The degree of belief that the answer to the second question Q2 is in the set A is given by the belief function Bel(A) = P{f1 | $\Gamma$(f1) $\subseteq$ A} = P{f1 | {f2 | (f1, f2) $\in$ C} $\subseteq$ A} = P{f1 | if f1 is the answer to Q1, then the answer to Q2 is in the set A). In words, the degree of belief in A is the sum (F1 is finite) of the probabilities for all answers to the first question Q1 that imply that the answer to the second question Q2 is in A. In general, Bel(F2) = 1 and Bel(Ø)=0. The $2^{|F2|}$ degrees of belief together form the belief function. For the basic example discussed above, Bel({YES}) = P{f1 | {f2 | (f1, f2) $\in$ C } $\subseteq$ {YES}} = P{f1 = YES} = p1 and Bel({NO}) = P {Ø} = 0. These degrees of belief were already informally stated.

### Dempster's Rule: Combining Belief Functions

A belief function Bel(A) = P{f1 | $\Gamma$(f1) $\subseteq$ A c F2} is specified by some mapping $\Gamma$ from F1 to F2 and some probability measure P. Dempster's rule defines how two different belief functions that represent independent items of evidence can be combined. In our context-aware system, these belief functions are based on the actual values of the same context attribute provided by two independent context sources with known QoC parameters. Let Bel1(A) = P1{f11 | $\Gamma$1(f11) $\subseteq$ A $\subseteq$ F2} for the first context source CS1 be specified by mapping $\Gamma$1 from F11 to F2 and probability measure P1. Similarly, Bel1(A) = P2{f12 | $\Gamma$2(f12) $\subseteq$ A $\subseteq$ F2} for the second context source CS2 is specified by mapping $\Gamma$2 from F12 to F2 and probability measure P2. The probability measures represent the QoC parameters. The combined belief function Bel(A) is formally derived for the basic example in the two cases of reinforcing and conflicting context sources. This derivation can be used as a recipe for more complex cases, e.g. when |F2| > 2.

*Case 1: Reinforcing Context Sources*

Let Bel(A) = P{(f11,f12) | $\Gamma$( f11,f12) c A $\subseteq$ F2} represent the combined belief function, where P is the product measure P1 x P2 on F11 x F12. Table 1 below shows the mapping $\Gamma$: F11 x F12 $\rightarrow$ F2 for the basic example in the case that CS1 and CS2 both answered Q2 with YES. In this case, Bel1({YES}) = p1, Bel2({YES}) = p2, and Bel1({NO}) = Bel2({NO}) = 0. Since for all (f11, f12) it holds that $\Gamma$(f11, f12) = $\Gamma$1(f11) n $\Gamma$2(f12) $\neq \varnothing$, we observe that CS1 and CS2 are non-contradicting. The set of compatible answers (f11, f12, f2) consists of { (YES, YES, YES), (YES, NO, YES), (NO, YES, YES), (NO, NO, YES), (NO, NO, NO)}. Therefore, Bel({YES}) = P{(f11, f12) = (YES, YES)} + P{(f11, f12) = (YES, NO)} + P{(f11,f12) = (NO,YES)} = p1 p2 + p1 (1-p2) + p2 (1-p1) = p1 + p2 - p1 p2 = 1 - (1-p1) (1-p2), and BEL({NO}) = P{Ø} = 0. As a conclusion, the first and second context sources CS1, CS2 do not just confirm each other; they reinforce each other.

**Table 1 CS1 and CS2 both answered Q2 with YES.**

| f11 | P 1 | Γ1 | f12 | P2 | Γ2 | Γ(f11,f12) = Γ1(f11)∩ Γ2(f12) |
|-----|-----|-----|-----|-----|-----|-----|
| YES | p1 | YES | YES | p2 | YES | YES |
| YES | p1 | YES | NO | 1-p2 | YES, NO | YES |
| NO | 1-p1 | YES, NO | YES | p2 | YES | YES |
| NO | 1-p1 | YES, NO | NO | 1-p2 | YES, NO | YES, NO |

*Case* 2: *Conflicting Context Sources*

Table 2 shows the mapping $\Gamma$: F11 x F12 → F2 for the basic example in the case that the first context source CS1 answered the second question Q2 with NO, and the second context source CS2 answered the second question Q2 with YES. In this case, Bel1({YES}) = p1, Bel2({NO}) = p2, and Bel1({NO}) = Bel2({YES}) = 0. Since Γ1(YES) ∩ Γ2 (YES) = Ø, we observe that the first and second context source CS1,CS2 are contradicting, and only one of them can be correct. The set of compatible answers (f11, f12, f2) consists of {(YES, NO, YES), (NO, YES, NO), (NO, NO, YES), (NO, NO, NO) }. P is the product measure P1 x P2 normalized by those (f11, f12) for which Γ(f11, f12) ≠ Ø. The degree of belief that CS1 is correct is Bel({YES}) = P{(f11,f12) | Γ( f11, f12) ⊆ {YES}} = P{(f11, f12)=(YES, NO)} = p1 (1-p2) / (1-p1 p2), and the degree of belief that CS2 is correct is Bel({NO}) = p2 (1-p1) / (1-p1 p2). These two degrees of belief were already informally derived in the "Basic Example" section.

**Table 2 CS1 answered Q2 with YES, and CS2 answered Q2 with NO.**

| f11 | P 1 | Γ1 | f12 | P2 | Γ2 | Γ(f11, f12) = Γ1(f11)∩ Γ2(f12) |
|-----|-----|-----|-----|-----|-----|-----|
| YES | p1 | YES | YES | p2 | NO | Ø |
| YES | p1 | YES | NO | 1-p2 | YES, NO | YES |
| NO | 1- p1 | YES, NO | YES | p2 | NO | NO |
| NO | 1- p1 | YES, NO | NO | 1-p2 | YES, NO | YES, NO |

**Interpretation**

There has been much debate in the literature about the interpretation of belief functions, especially since there is no interpretation of Dempster-Shafer theory that is analogous to the interpretation of probability theory in terms of random events, e.g. "throwing coins", see e.g. G. Shafer "Constructive Probability" (1981). Belief functions do not have the same properties as probability distributions. In our basic example, the degree of belief that CS2's answer to Q2 is true equals p2, while the degree of belief that it is false equals zero. These degree of belief values add up to p2 ≤ 1, while probabilities values always add up to 1. How should degrees of belief be interpreted then? Should they be regarded as lower bounds on probabilities? This would imply that we are looking for those probability distributions that satisfy the bounds set by (1) the individual belief functions for each of the context sources, and (2) the belief function that results from their combination. Such probability distributions do exist if no normalization is required, but they do not necessarily exist if normalization is required, see G. Shafer "Perspectives of the Theory and Practice of Belief Functions". So degrees of belief should not be interpreted as lower bounds on unknown true probabilities, mainly because this is incompatible with Dempster's rule of combining belief functions. Although an interpretation of degrees of belief in terms of lower bounds on probabilities may be technically possible in specific cases, it assumes that true probability exists for the truth of the context information given by a particular context source. However, in our basic example, such true probability only exists for context source CS1 if there is a population of context sources like CS1 for which the (subjective) probability that they are reliable can be based on the long-run frequency with which the context sources in this population are reliable, which is not necessarily the case. Moreover, in practice, it may be irrelevant whether true probability exists. We are looking for quantitative methods to assess the combined evidence (information) from multiple witnesses (context sources); exactly what Dempster-Shafer theory was originally designed for. It allows integrating non-statistical evidence in an objective way. We will adopt this specific application of Dempster-Shafer theory within context-aware systems as part of our *QoC calculus.* To this end, we rely on the metaphor for belief functions of "the witness who may or not be reliable", where a witness is an unreliable context source for which unreliability is expressed in terms of QoC parameters.

Annex 2: Analytical QoC quantification of a WiFi-based location source

In the following, point **AP** represents the actual location of a WiFi access point, as shown in **Fig. 6.** A first radius $r_1$ is the maximum distance (e.g. 300 meters) at which the unique MAC address of the access point AP can be sensed. So the assumption is that in practice the access point AP can only be detected within a finite range corresponding to a circle $C_1$ (not to be confounded with the reference sign for context information C1). The access point AP is sensed at a first location $L_1$ during a war(wireless access revolution) drive. The coordinates of the first location $L_1$ are determined using GPS. Note, distance(AP,$L_1$) $\leq r_1$, i.e., Pr{$L_1 \in C_1$} = 1. Now suppose the access point AP is sensed again at a second location $L_2$, and the war drive database returns the coordinates of $L_1$. The question is: What is the probability that the second location $L_2$ is located within a second circle $C_2$ having a second radius $r_2$ from the first location $L_1$, i.e. Pr{$L_2 \in C_2$} as a function of $r_2$ given a fixed suitable value of $r_1$? The answer to this question quantifies the probability of correctness of a location estimate based on WiFi, i.e. a QoC value of the second available context source CS2 shown in Fig. 1.

We assume that the war drive database is populated as follows, see e.g. Wireless Geographic Logging Engine, http://www.wigle.net/, last visited Feb. 7, 2006. When a MAC address is sensed by a mobile terminal, the GPS location of this terminal is recorded. If the MAC address is not yet in the war drive database, it is added and the recorded GPS coordinate is associated with it. Note that the results described herein are applicable for war drive databases for various wireless and radio technologies, including WiFi, GSM cell IDs, and Bluetooth. Note also that the value of the first radius $r_1$ is technology-dependent. In practice, it is hard to reduce the value of the first radius $r_1$ by taking characteristics of the received signal into account. In fact, the relation between distance(AP,$L_1$) and received signal-to-noise ratio is hard to quantify in general, especially if no changes are made in wireless technologies, deployments, and standards.

In the following, several special cases are treated with an increasing degree of generalization:

1. $r_2 = 2 \times r_1$. It is easy to see that Pr{$L_2 \in C_2$} = 1. In other words, there is a probability of 100% of being within 2 x $r_1$ meters of the coordinate from the war drive database.

2. $r_2 = r_1$ and during the war drive, the access point AP was sensed at the maximum distance, i.e. distance(AP,$L_1$) = $r_1$. Referring to **Figs. 7a,b**, we obtain

$$\Pr\{L_2 \in C_2\} \geq \frac{\text{area}(C_1 \cap C_2)}{\pi \cdot r_1^2}, \text{ where } \text{area}(C_1 \cap C_2) = 4 \cdot \int_0^{\frac{r_1}{2}} \sqrt{r_1^2 - (x - r_1)^2} \, \partial x$$

First substituting $x - r_1 = r_1 \sin(\theta)$, $\theta \in [-\pi/2, \pi/2]$, where $\partial x / \partial \theta = r_1 \cos(\theta)$, and then rewriting $1 - \sin^2(\theta) = \cos^2(\theta)$ yields

$$\text{area}(C_1 \cap C_2) = 4 \cdot \int_{\arcsin(-1)}^{\arcsin(-\frac{1}{2})} \sqrt{r_1^2 \cos^2(\theta)} \cdot r_1 \cdot \cos(\theta) \partial \theta = 4 r_1^2 \cdot \int_{-\frac{\pi}{2}}^{-\frac{\pi}{6}} \cos^2(\theta) \partial \theta$$

By substituting the trigonometric identity $\cos^2(\theta) = (1 + \cos(2\theta))/2$, this expression reduces to

$$\text{area}(C_1 \cap C_2) = 4 r_1^2 \cdot \left(\frac{1}{2}\theta + \frac{1}{4}\sin(2\theta)\right)\Bigg|_{-\frac{\pi}{2}}^{-\frac{\pi}{6}} = r_1^2 \cdot \left(\frac{2}{3}\pi - \frac{1}{2}\sqrt{3}\right)$$

Finally,

$$Pr\{L_2 \in C_2\} \geq \frac{2}{3} - \frac{1}{2\pi}\sqrt{3} \approx 0.391 \ .$$

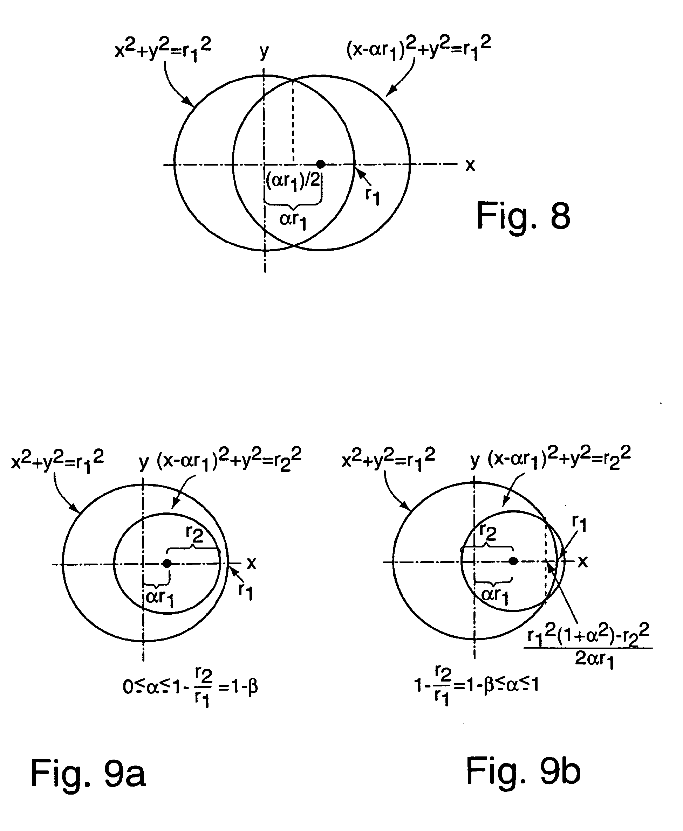

3. $r_2 = r_1$ and during the war drive the access point AP was sensed at the distance distance$(AP, L_1) = \alpha r_1$, $0 \leq \alpha \leq 1$. Referring to **Fig. 8**, we obtain for a given value of $\alpha$

$$Pr\{L_2 \in C_2\}(\alpha) = \frac{\text{area}(C_1 \cap C_2)}{\pi \cdot r_1^2}, \text{ where } \text{area}(C_1 \cap C_2) = 4 \cdot \int_{-(1-\alpha)r_1}^{\frac{\alpha r_1}{2}} \sqrt{r_1^2 - (x - \alpha r_1)^2} \, \partial x \ .$$

Now substitution of $x - \alpha r_1 = r_1 \sin(\theta)$, $\theta \in [-\pi/2, \pi/2]$, where $\partial x/\partial\theta = r_1 \cos(\theta)$, yields that area$(C_1 \cap C_2)$ satisfies

$$\text{area}(C_1 \cap C_2) = 4 \cdot \int_{\arcsin(-1)}^{\arcsin(-\frac{\alpha}{2})} \sqrt{r_1^2 \cos^2(\theta)} \cdot r_1 \cdot \cos(\theta)\partial\theta = 4r_1^2 \cdot \int_{\frac{\pi}{2}}^{\arcsin(-\frac{\alpha}{2})} \cos^2(\theta)\partial\theta$$

By again substituting the trigonometric identity $\cos^2(\theta) = (1 + \cos(2\theta))/2$, and using $\arcsin(-x) = -\arcsin(x)$ and $\sin(-x) = -\sin(x)$, this expression reduces to

$$\text{area}(C_1 \cap C_2) = 4r_1^2 \cdot \left(\frac{1}{2}\theta + \frac{1}{4}\sin(2\theta)\right)\Big|_{-\frac{\pi}{2}}^{\arcsin(-\frac{\alpha}{2})} = r_1^2 \cdot \left(\pi - 2\arcsin(\frac{\alpha}{2}) - \sin(2\arcsin(\frac{\alpha}{2}))\right)$$

Then, by applying the approximations $\arcsin(x) \approx x$ and $\sin(x) \approx x$, based on the Taylor series, we find

$$Pr\{L_2 \in C_2\}(\alpha) = 1 - \frac{1}{\pi}\left(2\arcsin(\frac{\alpha}{2}) + \sin(2\arcsin(\frac{\alpha}{2}))\right) \approx 1 - \frac{2}{\pi}\alpha$$

Note that in case $\alpha = 0$, the circles $C_1$ and $C_2$ coincide, and in case $\alpha = 1$, we obtain the result of the previous case. Finally, by assuming a uniform distribution over the interval $0 \leq \alpha \leq 1$, which has probability density function $f(\alpha) = 1$, we obtain

$$Pr\{L_2 \in C_2\} = \int_\alpha Pr\{L_2 \in C_2\}(\alpha)\partial\alpha \approx \int_0^1\left(1 - \frac{2}{\pi}\alpha\right)\partial\alpha = \alpha - \frac{1}{\pi}\alpha^2\Big|_0^1 = 1 - \frac{1}{\pi} \approx 0.682$$

In other words, we roughly have a probability of 70% of being within $r_1$ meters of the coordinate from the war drive database.

4. Variable $r_2 \leq r_1$ and during the war drive the access point AP was sensed at the distance distance$(AP, L_1) = \alpha r_1$, $0 \leq \alpha \leq 1$. Referring to Figs. 9a,b, we distinguish between two cases

a. $C_2$ is a sub-region of $C_1$, $0 \leq \alpha \leq 1- r_2/r_1$,

$$\text{area}(C_1 \cap C_2) = \frac{r_2^2}{r_1^2} = \beta^2 \text{, where } r_2 = \beta r_1, \ 0 \leq \beta \leq 1$$

where $r_2 = \beta r_1$, $0 \leq \beta \leq 1$
Now

$$\Pr\{L_2 \in C_2\}_1(\beta) = \int_{\alpha=0}^{1-\beta} \Pr\{L_2 \in C_2\}(\alpha, \beta)\partial\alpha = \beta^2 \cdot (1-\beta),$$

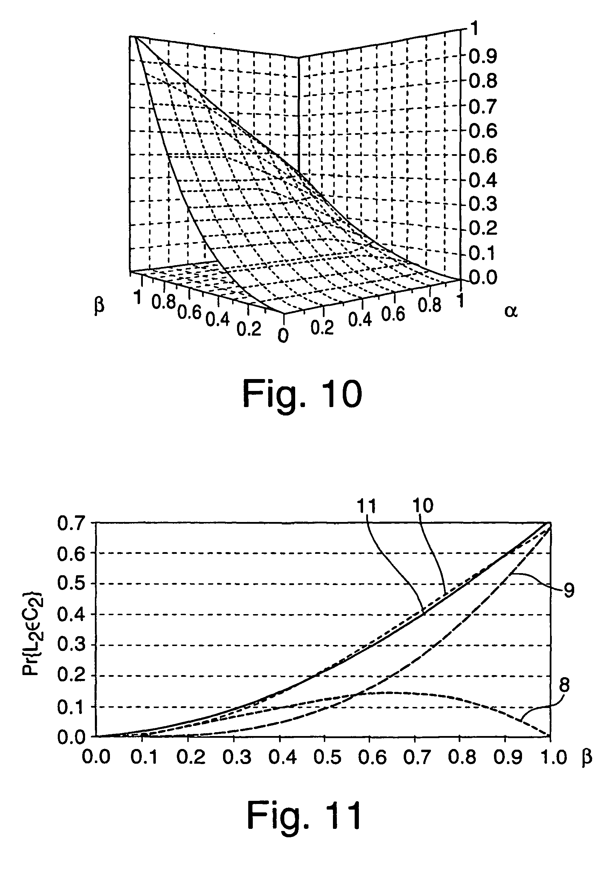

shown in **Fig. 11** as a first curve **8**.
b. $1- r_2/r_1 \leq \alpha \leq 1$,

$$\Pr\{L_2 \in C_2\}(\alpha, \beta) = \frac{\text{area}(C_1 \cap C_2)}{\pi \cdot r_1^2},$$

where

$$\text{area}(C_1 \cap C_2) = 2 \cdot \int_{\alpha r_1 - r_2}^{\frac{r_1^2(1+\alpha^2)-r_2^2}{2\alpha r_1}} \sqrt{r_2^2 - (x - \alpha r_1)^2} \, \partial x + 2 \cdot \int_{\frac{r_1^2(1+\alpha^2)-r_2^2}{2\alpha r_1}}^{r_1} \sqrt{r_1^2 - x^2} \, \partial x$$

Substituting $x - \alpha r_1 = r_2 \sin(\theta)$, $\theta \in [-\pi/2, \pi/2]$, where $\partial x/\partial\theta = r_2 \cos(\theta)$, in the left term and $x = r_1 \sin(\theta)$, $\theta \in [-\pi/2, \pi/2]$, where $\partial x/\partial\theta = r_1 \cos(\theta)$, in the right term yields

$$\text{area}(C_1 \cap C_2) = 2 \cdot r_2^2 \cdot \int_{-\frac{\pi}{2}}^{\arcsin\left(\frac{r_1^2(1-\alpha^2)-r_2^2}{2\alpha r_1 r_2}\right)} \cos^2(\theta)\partial\theta + 2 \cdot r_1^2 \cdot \int_{\arcsin\left(\frac{r_1^2(1+\alpha^2)-r_2^2}{2\alpha r_1^2}\right)}^{\frac{\pi}{2}} \cos^2(\theta)\partial\theta$$

Now substituting $r_2 = \beta r_1$, $0 \leq \beta \leq 1$, gives

$$\text{area}(C_1 \cap C_2) = 2 \cdot \beta^2 \cdot r_1^2 \cdot \int_{-\frac{\pi}{2}}^{\arcsin\left(\frac{1-\alpha^2-\beta^2}{2\alpha\beta}\right)} \cos^2(\theta)\partial\theta + 2 \cdot r_1^2 \cdot \int_{\arcsin\left(\frac{1+\alpha^2-\beta^2}{2\alpha}\right)}^{\frac{\pi}{2}} \cos^2(\theta)\partial\theta$$

Then

$$\text{area}(C_1 \cap C_2) = 2 \cdot \beta^2 \cdot r_1^2 \cdot \left(\frac{1}{2}\theta + \frac{1}{4}\sin(2\theta)\right)\Big|_{-\frac{\pi}{2}}^{\arcsin\left(\frac{1-\alpha^2-\beta^2}{2\alpha\beta}\right)} +$$

$$2 \cdot r_1^2 \cdot \left(\frac{1}{2}\theta + \frac{1}{4}\sin(2\theta)\right)\Big|_{\arcsin\left(\frac{1+\alpha^2-\beta^2}{2\alpha}\right)}^{\frac{\pi}{2}}$$

Next

$$\text{area}(C1 \cap C2) = r_1^2 \cdot \left(\frac{\beta^2+1}{2} \cdot \pi + \beta^2 \cdot \arcsin\left(\frac{1-\alpha^2-\beta^2}{2\alpha\beta}\right) + \right.$$

$$\frac{1}{2}\beta^2 \cdot \sin\left(2\arcsin\left(\frac{1-\alpha^2-\beta^2}{2\alpha\beta}\right)\right) -$$

$$\arcsin\left(\frac{1+\alpha^2-\beta^2}{2\alpha}\right) -$$

$$\left. \frac{1}{2}\sin\left(2\arcsin\left(\frac{1+\alpha^2-\beta^2}{2\alpha}\right)\right)\right)$$

Note, for $\alpha = 1 - \beta$, logically, the above expression reduces to area($C_1 \cap C_2$) = $\beta^2$, i.e. the same formula as above in case 4a. **Fig. 10** shows the corresponding function $\Pr\{L_2 \in C_2\}(\alpha, \beta)$ for $0 \leq \alpha \leq 1$ and $0 \leq \beta \leq 1$. Applying Taylor approximations of sin(x), arcsin(x), and cos(x) leads to complicated expressions. Also the Taylor series of two variables is not simple as it requires partial derivatives. However, it follows from numerical analysis of this function that the following polynomial approximation is valid

$$\Pr\{L_2 \in C_2\}(\alpha, \beta) \approx \sum_{j=0}^{J} \alpha^j \cdot \sum_{i=0}^{I} c_{ji} \cdot \beta^i .$$

Note that this function is polynomial in $\alpha$, so that integration over $\alpha$ is straightforward. By setting $I = 2$ and $J = 2$, we can obtain as a first approximation when $1 - \beta \leq \alpha \leq 1$ and $0 \leq \beta \leq 1$

$$\Pr\{L_2 \in C_2\}(\alpha, \beta) \approx 0.2415 \cdot \beta^2 + 1.0205 \cdot \beta - 0.2489 +$$
$$(-0.1906 \cdot \beta^2 - 0.9181 \cdot \beta + 0.4498) \cdot \alpha +$$
$$(0.2758 \cdot \beta^2 - 0.0298 \cdot \beta - 0.2086) \cdot \alpha^2$$

However, if $\beta = 1$ and $\alpha = 0$, the outcome should be 1, not 1.0131, yielding the constraint $c_{00} + c_{01} + c_{02} = 1$. In addition, if $\beta = 0$ and $\alpha = 1$, the outcome should be 0, not -0.0077, yielding the constraint $c_{00} + c_{10} + c_{20} = 0$. Moreover, we should require $0 \leq \Pr\{L_2 \in C_2\}(\alpha, \beta) \leq 1$. An accurate approximation that satisfies all these requirements is

$$\Pr\{L_2 \in C_2\}(\alpha, \beta) \approx 0.2347 \cdot \beta^2 + 1.0153 \cdot \beta - 0.2500 +$$
$$(-0.1906 \cdot \beta^2 - 0.9181 \cdot \beta + 0.4541) \cdot \alpha +$$
$$(0.2760 \cdot \beta^2 - 0.0296 \cdot \beta - 0.2041) \cdot \alpha^2$$

Finally,

$$\Pr\{L_2 \in C_2\}_2(\beta) = \int_{\alpha=1-\beta}^{1} \Pr\{L_2 \in C_2\}(\alpha, \beta)\partial\alpha \approx \beta^2 \cdot (0.0446 + 0.7407 \cdot \beta - 0.1905 \cdot \beta^2$$
$$+ 0.0920 \cdot \beta^3)$$

shown in Fig. 11 as a second curve **9**.

Note, $\Pr\{L_2 \in C_2\}_2$ ($\beta$ = 1) = 0.687, roughly the result of case 3. Finally, by combining the results of case 4a and 4b, we obtain for $0 \leq \beta \leq 1$

$$\Pr\{L_2 \in C_2\}(\beta) \approx \beta^2 \cdot (1.0446 - 0.2593 \cdot \beta - 0.1905 \cdot \beta^2 + 0.0920 \cdot \beta^3),$$

represented in Fig. 11 as a third curve **10**, being the sum of the first curve 8 and the second curve 9. Now we can partly make the trade-off between beta and the probability, i.e. improve the accuracy by decreasing the radius at the cost of probability! To simplify computations in practice, this expression can even be reduced to the following approximation

$$\Pr\{L_2 \in C_2\}(\beta) \approx \beta \cdot (0.1665 + 0.5366 \cdot \beta),$$

see also a fourth curve **11** represented in Fig. 11.

5. Variable $r_1 \leq r_2 \leq 2 r_1$ and during the war drive the access point AP was sensed at the distance: distance(AP,$L_1$) = $\alpha r_1$, $0 \leq \alpha \leq 1$. Similar to case 4, an expression to trade-off probability versus accuracy can be derived. In fact, this expression quantifies the variation of the probability $\Pr\{L_2 \in C_2\}$ between 0.687 and 1 by varying the radius $r_2$ between $r_1$ and $2 r_1$.

The above calculation shows by way of example that it is possible to derive a correlation between QoC parameters such as accuracy and probability by an analytical calculation, in addition or as an alternative to the performance of measurements for determining such a correlation.

## Claims

1. Method for providing context information ($C_1$,$C_2$) to a context-aware application (3), the method comprising the steps of:

   • receiving at least one context information (C1, C2) together with a first quality of context QoC parameter (r1, r2), said first QoC parameter being an accuracy measure of the context information (C1, C2), from at least one available context source (CS1, CS2),
   • determining a second QoC parameter (p1, p2), said second QoC parameter being a measure of a probability of correctness of the context information (C1, C2), received from each available context source (CS1, CS2), the first QoC parameter (r1, r2) and the second QoC parameter (p1, p2) of the context information (C1, C2) of each of the available context sources (CS1, CS2) being correlated,

• in case that a quality level derived from the second QoC parameter(s) (p1, p2) of the context information (C1, C2) of the available context source(s) (CS1, CS2) is lower than a quality level (p*) which is requested by the context-aware application (3), modifying the first QoC parameter (r1) of the context information (C1) received from one available context source (CS1) for adjusting the second QoC parameter (p1) of that context information (C1) in order to attain or exceed the requested quality level (p*), and

• providing the context information (C1) received from the one context source (CS1) together with the possibly modified first QoC parameter (x* r1) to the context-aware application (3).

2. Method according to claim 1, wherein in case that the quality level attained by modifying the first QoC parameter (r1) of the one context source (C1) differs from the requested quality level (p*), the attained quality level is also provided to the context-aware application (3).

3. Method according to claim 1, wherein in case that the quality level derived from the second QoC parameter(s) (p1, p2) of the context information (C1, C2) of each available context source (CS1, CS2) exceeds the requested quality level (p*),
the first QoC parameter (r1) of the context information (C1) is modified for adjusting the second QoC parameter (p1) of the context information (C1) in order to attain the requested quality level (p*).

4. Method according to claim 1, wherein the context information (C1, C2) is received from at least two available context sources (CS1, CS2), the method further comprising the step of:

determining whether or not the context information (C1, C2) and at least one of the QoC parameters (r1, r2) of the available context sources (CS1, CS2) satisfy a reinforcement constraint leading to an increased degree of belief in the context information (C1, C2).

5. Method according to claim 4, wherein
in case that the reinforcement constraint between the context information (C1, C2) and the at least one of the QoC parameters (r1, r2) of the available context sources (CS1, CS2) is satisfied, the first QoC parameter (r1) of the one context source (C1) is modified to a maximal or minimal possible value still satisfying the reinforcement constraint.

6. Method according to claim 4, wherein
in case that the reinforcement constraint is not satisfied, at least one of the QoC parameters (r1) of the context information (C1) of the one context source (CS1) is modified in order to satisfy the reinforcement constraint.

7. Method according to claim 1, wherein the correlation between the first QoC parameter (r1, r2) and the second QoC parameter (p1, p2) is determined by measurement or by calculation.

8. Method according to claim 1, wherein the context information (C1) is chosen to be a geographical coordinate and one QoC parameter (r1, r2) is chosen to be indicative of the accuracy of the geographical coordinate.

9. A context server (2), comprising:

a first communication unit (4) for receiving requests for context information from and providing context information ($C_1$, $C_2$) to at least one context-aware application (3),
a second communication unit (5) for receiving at least one context information (C1, C2) together with a first quality of context QoC parameter (r1, r2), said first QoC parameter being an accuracy measure of the context information (C1, C2), from at least one available context source (CS1, CS2),
a QoC parameter manipulation unit (6) for determining a second QoC parameter (p1, p2), said second QoC parameter being a measure of a probability of correctness of the context information (C1, C2) received from each available context source (CS1, CS2), the first QoC parameter (r1, r2) and the second QoC parameter (p1, p2) of the context information (C1, C2) of each available context source (CS1, CS2) being correlated,
the QoC parameter manipulation unit (6) being construed,
in case that a quality level derived from the second QoC parameter(s) (p1, p2) of the context information (C1, C2) of each available context source (CS1, CS2) is below a quality level (p*) requested by the context-aware application (3), to modify the first QoC parameter (r1) of the context information (C1) received from one available context source (CS1) for adjusting the second QoC parameter (p1) of that context information (C1) in order to attain or exceed the requested quality level (p*),

the first communication unit (4) being construed to provide the possibly modified first QoC parameter (x* r1) together with the context information (C1) of the one context source (CS1) to the at least one context-aware application (3).

10. Context server according to claim 9, further comprising a reinforcement constraint determining unit (7) for determining whether or not the context information (C1, C2) and at least one of the QoC parameters (r1, r2) of at least two available context sources (CS1, CS2) satisfy a reinforcement constraint leading to an increased degree of belief in the context information (C1, C2).

11. Context-aware system (1) comprising:

at least one context server (2) according to claim 9 or 10,
at least one context-aware application (3) communicating with the context server (2) for sending requests for context information to and receiving context information (C1) from the first communication unit (4),
and
at least one context source (CS1, CS2) communicating with the context server (2) for providing context information (C1, C2) together with a first QoC parameter (r1, r2), preferably a an accuracy measure of the context information (C1, C2), to the second communication unit (5).

12. Context-aware system according to claim 11, wherein at least one context source (CS1 to CSN) is selected from the group consisting of a WiFi-based location source and a GSM-based location source.

**Patentansprüche**

1. Verfahren zur Übermittlung von Kontextinformationen (C1, C2) an eine kontextsensitive Anwendung (3), wobei das Verfahren die folgenden Schritte umfasst:

• Empfangen mindestens einer Kontextinformation (C1, C2) zusammen mit einem ersten Kontextqualitäts-, QoC-Parameter (r1, r2), wobei der besagte erste QoC-Parameter ein Genauigkeitsmaß der Kontextinformation (C1, C2) ist, von mindestens einer verfügbaren Kontextquelle (CS1, CS2),
• Bestimmen eines zweiten QoC-Parameters (p1, p2), wobei der besagte zweite QoC-Parameter ein Wahrscheinlichkeitsmaß der Richtigkeit der von jeder verfügbaren Kontextquelle (CS1, CS2) empfangenen Kontextinformation (C1, C2) ist, wobei der erste QoC-Parameter (r1, r2) und der zweite QoC-Parameter (p1, p2) der Kontextinformation (C1, C2) einer jeden der verfügbaren Kontextquellen (CS1, CS2) korreliert sind,
• wenn eine von dem/den zweiten QoC-Parameter(n) (p1, p2) der Kontextinformation (C1, C2) der verfügbaren Kontextquelle(n) (CS1, CS2) abgeleitete Qualitätsstufe niedriger ist als eine Qualitätsstufe (p*), welche von der kontextsensitiven Anwendung (3) gefordert wird, Ändern des ersten QoC-Parameters (r1) der von einer verfügbaren Kontextquelle (CS1) empfangenen Kontextinformation (C1), um den zweiten QoC-Parameter (p1) dieser Kontextinformation (C1) derart anzupassen, dass die geforderte Qualitätsstufe (p*) erreicht oder überschritten wird, und
• Übermitteln der von der einen Kontextquelle (CS1) empfangenen Kontextinformation (C1) zusammen mit dem eventuell geänderten ersten QoC-Parameter (x* r1) an die kontextsensitive Anwendung (3).

2. Verfahren nach Anspruch 1, wobei, wenn die durch die Änderung des ersten QoC-Parameters (r1) der einen Kontextquelle (C1) erreichte Qualitätsstufe von der geforderten Qualitätsstufe (p*) abweicht, die erreichte Qualitätsstufe ebenfalls an die kontextsensitive Anwendung (3) übermittelt wird.

3. Verfahren nach Anspruch 1, wobei, wenn die von dem/den zweiten QoC-Parameter(n) (p1, p2) der Kontextinformation (C1, C2) einer jeden verfügbaren Kontextquelle (CS1, CS2) abgeleitete Qualitätsstufe die geforderte Qualitätsstufe (p*) überschreitet, der erste QoC-Parameter (r1) der Kontextinformation (C1) geändert wird, um den zweiten QoC-Parameter (p1) der Kontextinformation (C1) derart anzupassen, dass die geforderte Qualitätsstufe (p*) erreicht wird.

4. Verfahren nach Anspruch 1, wobei die Kontextinformation (C1, C2) von mindestens zwei verfügbaren Kontextquellen (CS1, CS2) empfangen wird, wobei das Verfahren weiterhin den folgenden Schritt umfasst:

Ermitteln, ob die Kontextinformation (C1, C2) und mindestens einer der QoC-Parameter (r1, r2) der verfügbaren Kontextquellen (CS1, CS2) eine Bestätigungsbedingung, welche zu einem erhöhten Vertrauensgrad in die Kontextinformation (C1, C2) führt, erfüllen oder nicht.

5. Verfahren nach Anspruch 4, wobei:

   Wenn die Bestätigungsbedingung zwischen der Kontextinformation (C1, C2) und mindestens einem der QoC-Parameter (r1, r2) der verfügbaren Kontextquellen (CS1, CS2) erfüllt ist, der erste QoC-Parameter (r1) der einen Kontextquelle (C1) auf einen für die Erfüllung der Bestätigungsbedingung maximal oder minimal möglichen Wert geändert wird.

6. Verfahren nach Anspruch 4, wobei:

   Wenn die Bestätigungsbedingung nicht erfüllt wird, mindestens einer der QoC-Parameter (r1) der Kontextinformation (C1) der einen Kontextquelle (CS1) geändert wird, um die Bestätigungsbedingung zu erfüllen.

7. Verfahren nach Anspruch 1, wobei die Korrelation zwischen dem ersten QoC-Parameter (r1, r2) und dem zweiten QoC-Parameter (p1, p2) durch Messung oder Berechnung bestimmt wird.

8. Verfahren nach Anspruch 1, wobei die ausgewählte Kontextinformation (C1) eine geografische Koordinate ist, und ein ausgewählter QoC-Parameter (r1, r2) für die Genauigkeit der geografischen Koordinate repräsentativ ist.

9. Kontextserver (2), umfassend:

   Eine erste Kommunikationseinheit (4) für den Empfang von Kontextinformationsanforderungen und die Übermittlung von Kontextinformationen (C1, C2) an mindestens eine kontextsensitive Anwendung (3),
   eine zweite Kommunikationseinheit (5) für den Empfang mindestens einer Kontextinformation (C1, C2) zusammen mit einem ersten Kontextqualitäts-, QoC-Parameter (r1, r2) von mindestens einer verfügbaren Kontextquelle (CS1, CS2), wobei der besagte erste QoC-Parameter ein Genauigkeitsmaß der Kontextinformation (C1, C2) ist,
   eine QoC-Parameter-Manipulationseinheit (6) zum Bestimmen eines zweiten QoC-Parameters (p1, p2), wobei der besagte zweite QoC-Parameter ein Wahrscheinlichkeitsmaß der Richtigkeit der von jeder verfügbaren Kontextquelle (CS1, CS2) empfangenen Kontextinformation (C1, C2) ist, wobei der erste QoC-Parameter (r1, r2) und der zweite QoC-Parameter (p1, p2) der Kontextinformation (C1, C2) einer jeden verfügbaren Kontextquelle (CS1, CS2) korreliert sind,
   wobei die QoC-Parameter-Manipulationseinheit (6) dazu ausgelegt ist,
   wenn eine von dem/den zweiten QoC-Parameter(n) (p1, p2) der Kontextinformation (C1, C2) einer jeden verfügbaren Kontextquelle (CS1, CS2) abgeleitete Qualitätsstufe niedriger ist als eine von der kontextsensitiven Anwendung (3) geforderte Qualitätsstufe (p*), den ersten QoC-Parameter (r1) der von einer verfügbaren Kontextquelle (CS1) empfangenen Kontextinformation (C1) zu ändern, um den zweiten QoC-Parameter (p1) dieser Kontextinformation (C1) derart anzupassen, dass die geforderte Qualitätsstufe (p*) erreicht oder überschritten wird,
   wobei die erste Kommunikationseinheit (4) dazu ausgelegt ist, den eventuell geänderten ersten QoC-Parameter (x* r1) zusammen mit der Kontextinformation (C1) der einen Kontextquelle (CS1) an die mindestens eine kontextsensitive Anwendung (3) zu übermitteln.

10. Kontextserver nach Anspruch 9, weiterhin umfassend eine Bestätigungsbedingungsermittlungseinheit (7), um zu ermitteln, ob die Kontextinformation (C1, C2) und mindestens einer der QoC-Parameter (r1, r2) von mindestens zwei verfügbaren Kontextquellen (CS1, CS2) eine Bestätigungsbedingung, welche zu einem erhöhten Vertrauensgrad in die Kontextinformation (C1, C2) führt, erfüllen oder nicht.

11. Kontextsensitives System (1), umfassend:

    Mindestens einen Kontextserver (2) nach Anspruch 9 oder 10,
    mindestens eine kontextsensitive Anwendung (3), welche mit dem Kontextserver (2) kommuniziert, zum Senden von Kontextinformationsanforderungen an die erste und zum Empfangen von Kontextinformationen (C1) von der ersten Kommunikationseinheit (4), und
    mindestens eine Kontextquelle (CS1, CS2), welche mit dem Kontextserver (2) kommuniziert, zum Übermitteln einer Kontextinformation (C1, C2) zusammen mit einem ersten QoC-Parameter (r1, r2), vorzugsweise einem Genauigkeitsmaß der Kontextinformation (C1, C2), an die zweite Kommunikationseinheit (5).

12. Kontextsensitives System nach Anspruch 11, wobei mindestens eine Kontextquelle (CS1 bis CSN) aus einer Gruppe bestehend aus einer WiFi-basierten Standortquelle und einer GSM-basierten Standortquelle ausgewählt wird.

## Revendications

1. Procédé pour fournir des informations contextuelles (C1, C2) à une application sensible au contexte (3), le procédé comprenant les étapes suivantes :

   • recevoir au moins une information contextuelle (C1, C2) avec un premier paramètre de qualité de contexte QoC (r1, r2), ledit premier paramètre QoC étant une mesure de précision des informations contextuelles (C1, C2), provenant d'au moins une source contextuelle disponible (CS1, CS2),
   • déterminer un deuxième paramètre QoC (p1, p2), ledit deuxième paramètre QoC étant une mesure d'une probabilité d'exactitude des informations contextuelles (C1, C2), provenant de chaque source contextuelle disponible (CS1, CS2), le premier paramètre QoC (r1, r2) et le deuxième paramètre QoC (p1, p2) des informations contextuelles (C1, C2) de chacune des sources contextuelles disponibles (CS1, CS2) étant corrélés,
   • dans le cas où un niveau de qualité dérivé du/des deuxièmes paramètre(s) QoC (p1, p2) des informations contextuelles (C1, C2) de la/des source(s) contextuelle(s) disponible(s) (CS1, CS2) est inférieur à un niveau de qualité (p*) qui est demandé par l'application sensible au contexte (3), modifier le premier paramètre QoC (r1) de l'information contextuelle (C1) reçue d'une source contextuelle disponible (CS1) pour ajuster le deuxième paramètre QoC (p1) de cette information contextuelle (C1) afin d'atteindre ou de dépasser le niveau de qualité demandé (p*), et
   • fournir l'information contextuelle (C1) reçue de la source contextuelle (CS1) avec le premier paramètre QoC éventuellement modifié (x* r1) à l'application sensible au contexte (3).

2. Procédé selon la revendication 1, dans lequel, dans le cas où le niveau de qualité atteint en modifiant le premier paramètre QoC (r1) de la source contextuelle (C1) est différent du niveau de qualité demandé (p*), le niveau de qualité atteint est également fourni à l'application sensible au contexte (3).

3. Procédé selon la revendication 1, dans lequel, dans le cas où le niveau de qualité dérivé du/des deuxième(s) paramètre(s) QoC (p1, p2) des informations contextuelles (C1, C2) de chaque source contextuelle disponible (CS1, CS2) dépasse le niveau de qualité demandé (p*),
   le premier paramètre QoC (r1) de l'information contextuelle (C1) est modifié pour ajuster le deuxième paramètre QoC (p1) de l'information contextuelle (C1) afin d'atteindre le niveau de qualité demandé (p*).

4. Procédé selon la revendication 1, dans lequel les informations contextuelles (C1, C2) sont reçues d'au moins deux sources contextuelles disponibles (CS1, CS2), le procédé comprenant en outre l'étape suivante :

   déterminer si oui ou non les informations contextuelles (C1, C2) et au moins un des paramètres QoC (r1, r2) des sources contextuelles disponibles (CS1, CS2) satisfont une contrainte de renforcement entraînant une augmentation du degré de certitude des informations contextuelles (C1, C2).

5. Procédé selon la revendication 4, dans lequel
   dans le cas où la contrainte de renforcement entre les informations contextuelles (C1, C2) et l'au moins un des paramètres QoC (r1, r2) des sources contextuelles disponibles (CS1, CS2) est satisfait, le premier paramètre QoC (r1) de la source contextuelle (C1) est modifié pour obtenir une valeur éventuelle maximale ou minimale satisfaisant toujours la contrainte de renforcement.

6. Procédé selon la revendication 4, dans lequel
   dans le cas où la contrainte de renforcement n'est pas satisfaite, au moins un des paramètres QoC (r1) de l'information contextuelle (C1) de la source contextuelle (CS1) est modifié afin de satisfaire la contrainte de renforcement.

7. Procédé selon la revendication 1, dans lequel la corrélation entre le premier paramètre QoC (r1, r2) et le deuxième paramètre QoC (p1, p2) est déterminée par une mesure ou par un calcul.

8. Procédé selon la revendication 1, dans lequel l'information contextuelle (C1) est choisie pour être une coordonnée géographique et un paramètre QoC (r1, r2) est choisi pour indiquer la précision de la coordonnée géographique.

9. Serveur contextuel (2), comprenant :

une première unité de communication (4) pour recevoir des demandes d'informations contextuelles à partir d'au moins une application sensible au contexte (3) et pour fournir des informations contextuelles (C1, C2) au moins à celle-ci.
une deuxième unité de communication (5) pour recevoir au moins une information contextuelle (C1, C2) avec un premier paramètre de qualité de contexte QoC (r1, r2), ledit premier paramètre QoC étant une mesure de précision des informations contextuelles (C1, C2), provenant d'au moins une source contextuelle disponible (CS1, CS2),
une unité de manipulation de paramètre QoC (6) pour déterminer un deuxième paramètre QoC (p1, p2), ledit deuxième paramètre QoC étant une mesure d'une probabilité d'exactitude des informations contextuelles (C1, C2) reçues de chaque source contextuelle disponible (CS1, CS2), le premier paramètre QoC (r1, r2) et le deuxième paramètre QoC (p1, p2) des informations contextuelles (C1, C2) de chaque source contextuelle disponible (CS1, CS2) étant corrélés,
l'unité de manipulation de paramètre QoC (6) étant conçue,
dans le cas où un niveau de qualité dérivé du/des deuxièmes paramètre(s) QoC (p1, p2) des informations contextuelles (C1, C2) de chaque source contextuelle disponible (CS1, CS2) est inférieur à un niveau de qualité (p*) demandé par l'application sensible au contexte (3), afin de modifier le premier paramètre QoC (r1) de l'information contextuelle (C1) reçue d'une source contextuelle disponible (CS1) pour ajuster le deuxième paramètre QoC (p1) de cette information contextuelle (C1) afin d'atteindre ou de dépasser le niveau de qualité demandé (p*),
la première unité de communication (4) étant conçue pour fournir le premier paramètre QoC éventuellement modifié (x* r1) avec l'information contextuelle (C1) de la source contextuelle (CS1) à l'au moins une application sensible au contexte (3).

10. Serveur contextuel selon la revendication 9, comprenant en outre une unité de détermination de contrainte de renforcement (7) pour déterminer si oui ou non les informations contextuelles (C1, C2) et au moins un des paramètres QoC (r1, r2) d'au moins deux sources contextuelles disponibles (CS1, CS2) satisfont une contrainte de renforcement entraînant une augmentation du degré de certitude des informations contextuelles (C1, C2).

11. Système sensible au contexte (1) comprenant :

au moins un serveur contextuel (2) selon la revendication 9 ou 10,
au moins une application sensible au contexte (3) communiquant avec le serveur contextuel (2) pour envoyer des demandes d'informations contextuelles à la première unité de communication (4) et pour recevoir une information contextuelle (C1) à partir de celle-ci, et
au moins une source contextuelle (CS1, CS2) communiquant avec le serveur contextuel (2) pour fournir des informations contextuelles (C1, C2) avec un premier paramètre QoC (r1, r2), de préférence une mesure de précision des informations contextuelles (C1, C2), à la deuxième unité de communication (5).

12. Système sensible au contexte selon la revendication 11, dans lequel au moins une source contextuelle (CS1 à CSN) est sélectionnée dans le groupe constitué d'une source de géolocalisation WiFi et d'une source de géolocalisation GSM.

Fig. 1

Fig. 2

Fig. 3a          Fig. 3b          Fig. 3c

Fig. 5

Fig. 4

Fig. 6

Fig. 7a

Fig. 7b

$x^2+y^2=r_1{}^2$     $y$     $(x-\alpha r_1)^2+y^2=r_1{}^2$

$(\alpha r_1)/2$

$\alpha r_1$

$r_1$

$x$

## Fig. 8

$x^2+y^2=r_1{}^2$     $y\ (x-\alpha r_1)^2+y^2=r_2{}^2$

$r_2$

$\alpha r_1$

$r_1$

$x$

$$0\leq\alpha\leq 1-\frac{r_2}{r_1}=1-\beta$$

## Fig. 9a

$x^2+y^2=r_1{}^2$     $y\ (x-\alpha r_1)^2+y^2=r_2{}^2$

$r_2$

$\alpha r_1$

$r_1$

$x$

$$\frac{r_1{}^2(1+\alpha^2)-r_2{}^2}{2\alpha r_1}$$

$$1-\frac{r_2}{r_1}=1-\beta\leq\alpha\leq 1$$

## Fig. 9b

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **PAUL CASTRO ; RICHARD MUNTZ.** Managing Context Data for Smart Spaces. *IEEE Personal Communications,* October 2000, 44-46
- **PHILIP D.GRAY ; DANIEL SALBER.** Modelling and Using Sensed Context Information in the Design of Interactive Applications. *Proc. 8th IFIP Intern. Conf. on E27ngineering for Human-Computer Interaction,* 2001, 317-336
- **KAREN HENRICKSEN ; JADWIGA INDULSKA ; ANDRY RAKOTONIRAINY.** Modeling Context Information in Pervasive Computing Systems. *Proc. First Intern. Conf. On Pervasive Computing,* 26 August 2002, 79-117
- **THOMAS BUCHHOLZ ; ALEX KÜPPER ; MICHAEL SCHIFFERS.** Quality of Context: What It Is And Why We Need It. *Proc. of the 10th Workshop of the OpenView University Association,* July 2003
- **HUI LEI ; DABY M. SOW ; JOHN S. DAVIS II ; GURUDUTH BANAVAR ; MARIA R. EBLING.** The Design and Applications of a Context Service. *ACM SIGMOBILE Mobile Computing and Communications Review archive,* October 2002, vol. 6 (4), 45-55
- **PAUL CASTRO ; PATRICK CHIU ; TED KREMENEK ; RICHARD MUNTZ.** A Probabilistic Room Location Service for Wireless Networked Environments. *Proc. Intern. Conf. On Ubiquitous Computing,* 30 September 2001, 18-34
- **ANAND RANGANATHAN ; JALAL AL-MUHTADI ; ROY H. CAMPBELL.** Reasoning about Uncertain Contexts in Pervasive Computing Environments. *Pervasive Computing,* 2004, 62-70
- **Pravin Pawar ; Aart Van Halteren ; Kamran Sheikh.** Enabling context-aware computing for the nomadic mobile user: A service oriented and quality driven approach. *IEEE wireless communications and networking conference (WCNC),* 2007, 2531-2536
- **G. SHAFER.** Perspectives on the theory and practice of belief functions. *International Journal of Approximate Reasoning,* 1990, vol. 4, 323-362
- Constructive probability. *Synthese,* 1981, vol. 48, 1-60
- Classic Works of the Dempster-Shafer Theory of Belief Functions. Springer, 2007